## Europäisches Patentamt

## European Patent Office

## Office européen des brevets

(11) Veröffentlichungsnummer: **0 109 043**
**B1**

# EUROPÄISCHE PATENTSCHRIFT

(45) Veröffentlichungstag der Patentschrift:
**08.10.86**

(21) Anmeldenummer: **83111167.9**

(22) Anmeldetag: **09.11.83**

(51) Int. Cl.⁴: **C 09 K 5/06,** F 28 D 21/00

(54) Latentwärmespeicher mit Salzhydrat oder mit einer Mischung von Salzhydraten und Salzen.

(30) Priorität: **13.11.82 DE 3242142**

(43) Veröffentlichungstag der Anmeldung:
**23.05.84 Patentblatt 84/21**

(45) Bekanntmachung des Hinweises auf die Patenterteilung:
**08.10.86 Patentblatt 86/41**

(84) Benannte Vertragsstaaten:
**AT BE CH FR GB IT LI LU NL SE**

(56) Entgegenhaltungen:
**EP - A - 0 073 836**
**EP - A - 0 076 897**
**DE - A - 2 552 698**
**FR - A - 2 428 223**
**US - A - 4 287 942**

(73) Patentinhaber: **Kernforschungsanlage Jülich**
**Gesellschaft mit beschränkter Haftung, Postfach 1913,**
**D-5170 Jülich 1 (DE)**

(72) Erfinder: **Grimme, Friedrich Wilhelm, Dr., Fischweiher 3,**
**D-5100 Aachen (DE)**
Erfinder: **Seidel, Hans-Joachim, Steinmühlenweg 43,**
**D-5100 Aachen (DE)**
Erfinder: **Lohr, Alex, Wolfgang-Müller-Strasse 28,**
**D-5000 Köln 51 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Latentwärmespeicher mit Salzhydrat oder mit einer Mischung von Salzhydraten und Salzen, die bei Temperaturen um ihren Schmelzpunkt als Wärmespeichermedien dienen und in Matten aus wasserdampfundurchlässiger Folie verfüllt sind.

Latentwärmespeicher werden zur Speicherung thermischer Überschussenergie eingesetzt, mit dem Ziel, die gespeicherte Energie bei Wärmedefizit wieder zur Verfügung zu stellen. Es soll eine optimale Energieausnutzung erreicht werden. Anwendung finden Latentwärmespeicher beispielsweise in Gewächshäusern zur Speicherung der am Tage entstehenden Wärme zur Beheizung des Gewächshauses bei Nacht. Latentwärmespeicher eignen sich auch zum Ausgleich von Temperaturschwankungen in Gebäuden und tragen so zur Ersparnis von Energie bei. Ausgenutzt wird bei Latentwärmespeichern der eingangs erwähnten Art die latente Wärme, die bei der Phasenumwandlung eines Stoffes abgegeben oder aufgenommen wird. Die Wärme wird in diesem Falle bei konstanter Speichertemperatur oder sich nur geringfügig verändernder Temperatur aufgenommen und abgegeben, was vor allem für die Beheizung von Räumen nützlich ist, in denen eine gleichbleibende Temperatur aufrechterhalten werden soll. Bei Salzhydraten oder Mischungen von Salzhydraten mit Salzen wird das Schmelzen des Salzes und die für die Umwandlung zwischen fester und flüssiger Phase benötigte Wärme genutzt. Für die Beheizung von Wohnräumen oder den Unterglasgartenbau sind Salzhydrate oder Salzhydratmischungen mit Schmelztemperaturen zwischen 20 und 26 °C geeignet. Für Kühlzwecke werden Salzhydratmischungen mit einem Schmelzpunkt ≤14 °C gewählt. Die Schmelztemperatur lässt sich durch Zugabe von Salzen einstellen, wobei eutektische Mischungen gebildet werden.

Probleme der Latentwärmespeicher sind einerseits die Wärmeübertragung, die dann gestört ist, wenn der Wärmedurchgang durch feste Salzschichten behindert wird, die sich bei erster Wärmeabgabe aus dem Speicher an den sich dabei abkühlenden Speicherwänden ausbilden, und andererseits die Stratifikation. Als Stratifikation wird eine Entmischung der Salzhydrate bezeichnet, die dadurch entsteht, dass sich beim Schmelzen Kristalle und Kristallwasser separieren, wobei sich das Kristallwasser über den sich absetzenden Kristallen sammelt. Dies hindert ein gleichmässiges Erstarren der Salzhydrate in den Speicherzellen bei Abgabe von Wärme aus dem Latentwärmespeicher.

Zur Lösung dieser Probleme ist es bekannt, den Salzhydraten Öl beizumischen, das durch die Salzmischung hindurchgepumpt wird und so für Verwirbelungen sorgt, die ein Entmischen und Ausbilden von Salzschichten erschweren, vgl. Deutsche Forschungs- und Versuchsanstalt für Luft- und Raumfahrt, wissenschaftlicher Bericht «Forschungsbereich Energetik», 1980, S. 26–28. Nachteilig für die Speicherung von Wärme mit Salzhydraten ist die geringe Auswahl geeigneter chemischer Stoffe für die verschiedenen Arbeitstemperaturen je nach Anwendungsfall.

Für den Temperaturbereich zwischen 30 und 60 °C in Speichern ist Glaubersalz ($Na_2SO_4 . 10 H_2O$), dessen Schmelztemperatur ca. 32 °C beträgt, eingesetzt worden. So ist das Abpacken von Salzhydraten in kleinen Behältern bekannt, die z.B. aus Kunststoff bestehen können. Es werden sowohl Speichertanks, in denen ein mit Salzhydrat gefülltes Röhrenbündel angeordnet ist, als auch kissenartige Salzhydratbehälter verwendet, vgl. «Solar- und Wärmepumpen Info-Dienst», Heft 5, 1982, Seite 4. Die Röhrenbündel und die kissenartigen Behälter werden vom aufzuheizenden oder zu kühlenden, die Wärme transportierenden Medium umspült.

Eine Verwendung von Latentwärmespeichern in mit Solarenergie beheizten Wohnhäusern wurde von C. Benton, «Off-peak cooling using phase chance material», Massachusetts Institut of Technology, 1979, untersucht. Die Latentwärmespeicher wiesen gegen die Stratifikation stabilisiertes Glaubersalz, verpackt in dünnen Schichten von Aluminiumfolie auf. Die Aluminiumfolie war beidseitig mit Polyethylenfolien beschichtet worden. Solche Kombinationsfolien sind wasserdampfundurchlässig und korrosionsgeschützt. Zur Schmelzpunkterniedrigung bis auf eine unter Raumtemperatur liegende Temperatur enthielt die Salzmischung Natriumchlorid, NaCl, zur Vermeidung von Unterkühlung Borax $Na_2B_4O_7 \cdot 10 H_2O$.

Auch war pyrolytisches Siliciumoxid beigemischt worden, um der Stratifikation entgegenzuwirken. Die Schichtdicke einer Glaubersalzpackung betrug 2 cm, wobei durch eine Zwischenlage aus Polyethylen zwei Packungsebenen von je 9 mm Dicke geschaffen worden waren. Solche Salzhydratpackungen sind jedoch sehr lageempfindlich. Um die in der vorgenannten Veröffentlichung von C. Benton beschriebenen Latentwärmespeicher optimal ausnutzen zu können, ist eine horizontale Lage für Transport und Einbau der Packungen vorgeschrieben. Dies behindert eine vielseitige Verwendbarkeit solcher Wärmespeicher.

Aufgabe der Erfindung ist es, Latentwärmespeicher der eingangs erwähnten Art zu schaffen, die lageunempfindlich einsetzbar sind.

Diese Aufgabe wird überraschenderweise gemäss der Erfindung durch die in Patentanspruch 1 angegebene Ausbildung der Speichermatten des Latentwärmespeichers gelöst. Die Speichermatten weisen in sich abgeschlossene, mit Salzhydrat oder einer Mischung von Salzhydraten und Salzen gefüllte Zellen auf, deren Abmessung so gewählt ist, dass sich das Salzhydrat oder die Salzhydratmischung im Zellraum bei frei wählbarer Lage der Matten nicht entmischen kann.

Die erforderlichen Abmessungen für den Zellraum sind von der Art des Salzhydrates oder von der Zusammensetzung der Salzhydratmischung abhängig. Sie lassen sich experimentell in einfacher Weise ermitteln. Für eine Glaubersalzmi-

schung, die mit NaCl auf einen Schmelzpunkt zwischen 14 und 26 °C eingestellt ist, und pyrolytisches Siliciumoxid und Borax enthält, ergibt sich beispielsweise als maximal zulässiger Wandabstand für den Zellraum 1 cm.

In weiterer Ausbildung der Erfindung nach Patentanspruch 2 ist vorgesehen, die Zellen der Matten mit räumlichem Abstand zueinander anzuordnen. Dies vereinfacht einerseits die Herstellung der mit Zellen zu versehenden Matten. Denn werden beispielsweise kunststoffbeschichtete Aluminiumfolien als Material für die Matten verwendet, so lassen sich die Zellen durch Verformen der Folien, bevorzugt durch Warmziehen, erzeugen. Die Zellen werden danach mit Salzhydrat gefüllt und mit einer weiteren kunststoffbeschichteten Aluminiumfolie abgedeckt. Darüber hinaus ermöglicht der räumliche Abstand zwischen den Zellen eine allseitige Umspülung jeder Zelle mit dem zum Wärmetransport eingesetzten Medium. Der zwischen den Zellen gebildete Strömungsraum wird so gewählt, dass der Wärmeübergang von der Zellenoberfläche auf das die Zellen umspülende Medium möglichst hoch ist, Patentanspruch 3.

Um die für die Herstellung der Zellen durch Verformen der Matten erforderlichen verhältnismässig grossen Zellenabstände und die für den Latentwärmespeicher wünschenswerte Packungsdichte optimieren zu können, besteht eine weitere Ausbildung der Erfindung nach Patentanspruch 4 darin, den Abstand zwischen den Zellen derart zu bemessen, dass beim Aufeinanderlegen zweier Matten die Zellen der einen Matte im Zwischenraum zwischen den Zellen der anderen Matten angeordnet sind. Die Zellen können quaderförmig oder zylindrisch geformt sein. Bevorzugt weisen die Zellen konisch verlaufende Wände auf, die das Herstellen, aber auch das Stapeln der Matten erleichtern, Patentanspruch 5.

Geeignet sind insbesondere Zellen, die die Form von Pyramidenstümpfen aufweisen, Patentanspruch 6.

Kommt es nicht auf ein Durchströmen der Zellen, sondern allein auf die Packungsdichte an, werden die Zwischenräume zwischen den Zellen gemäss Patentanspruch 7 spiegelbildlich zur Zellenform gestaltet. Die Zellen der einen Matte füllen dann beim Stapeln die Zwischenräume zwischen den Zellen der anderen Matte vollständig aus, so dass eine kompakte Latentwärmespeicherschicht gebildet wird. Als Speichermedium wird bevorzugt Glaubersalz oder eine mit Glaubersalz gebildete eutektische Salzhydratmischung verwendet.

Die Erfindung wird anhand von Ausführungsbeispielen näher erläutert.

Die Figuren zeigen im einzelnen:
Fig. 1 Latentwärmespeicher mit einer zylinderförmige Zellen aufweisenden Matte;
Fig. 2 beidseitig der Matte angeordnete Zellen;
Fig. 3 stapelbare Matten mit Zellen, die die Form von Pyramidenstümpfen aufweisen;

Fig. 4 Querschnitt einer Matte mit einer Doppellage von Zellen, die pyramidenstumpfartig geformt sind.

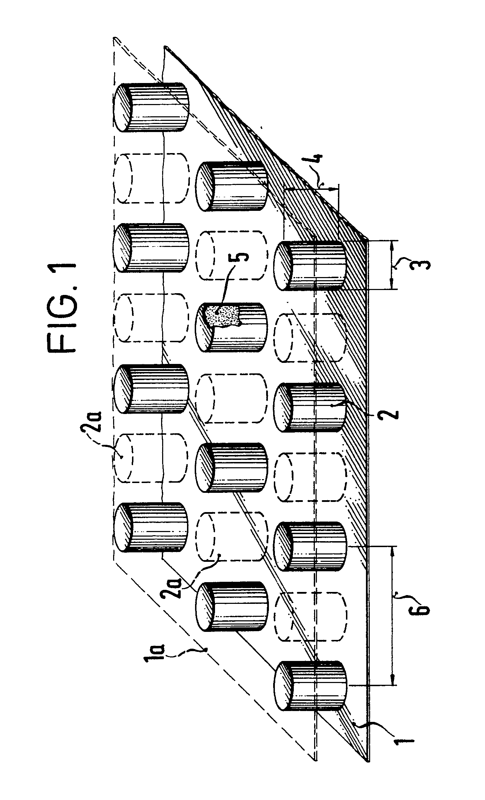

Fig. 1 zeigt eine Matte 1 für einen Latentwärmespeicher, die aus einer mit Polyethylen beschichteten 0,025 mm starken Aluminiumfolie besteht. Auf ihren beiden Seiten ist die Aluminiumfolie mit einer Polyethylenfolie von 0,025 mm Stärke beschichtet. Dieses für die Herstellung der Matte 1 verwendete Material ist wasserdampfundurchlässig. Durch Warmziehen wird die Matte 1 mit erhabenen zylinderförmigen Zellen 2 versehen. Nach Abfüllen der Zellen 2 mit Salzhydrat oder mit einer Mischung von Salzhydraten und Salzen werden die Zellen durch Auflegen einer weiteren kunststoffbeschichteten Aluminiumfolie verschlossen.

Durchmesser 3 und Höhe 4 der Zellen 2 sind so bemessen, dass im Zellraum 5 in keiner Lage der Matte 1 eine Entmischung zwischen dem im Zellraum vorhandenen Salzhydrat oder der Mischung von Salzhydraten und Salzen und verbleibender Schmelze stattfinden kann. Eine Stratifikation des Speichermediums ist somit ausgeschlossen.

Die Zellen 2 sind mit räumlichem Abstand 6 auf der Matte 1 angeordnet. Im Ausführungsbeispiel ist der Abstand so gewählt, dass die Matten bei versetzter Anordnung der Zellen stapelbar sind. Beim Aufeinanderlegen zweier Matten 1, 1a – die Matte 1a mit Zellen 2a ist in Fig. 1 strichliniert eingezeichnet, – befinden sich die Zellen 2a der Matte 1a im Zwischenraum zwischen den Zellen 2 der Matte 1. Der dann immer noch verbleibende Zwischenraum zwischen den Zellen 2 und 2a wird als Strömungsraum für ein die Wärme transportierendes Medium genutzt. Er ist so ausgelegt, dass unter Berücksichtigung der Eigenschaften des wärmetransportierenden Mediums und der entstehenden Strömungsverhältnisse im Strömungsraum ein hoher Wärmeübergang zwischen den Wänden der Zellen 2, 2a und dem wärmetransportierenden Medium gegeben ist.

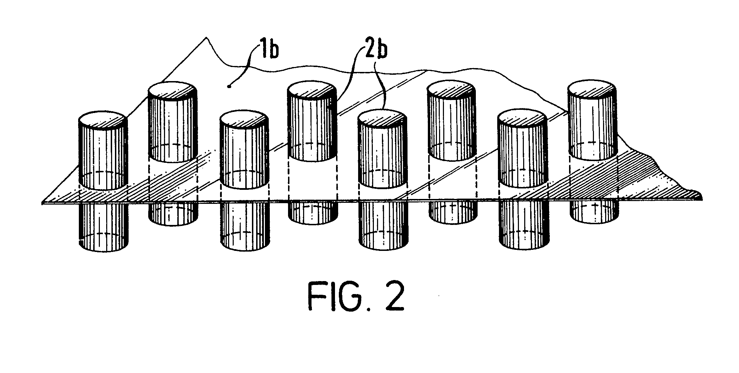

In Fig. 2 ist eine Matte 1b dargestellt, die beidseitig gleichartige zylinderförmige Zellen 2b aufweist. Die Abmessungen der Zellen 2b entsprechen denen der Zellen 1 und 1a im Ausführungsbeispiel nach Fig. 1. Hergestellt wird die Matte 1b durch wasserdampfdichtes Verbinden zweier Matten, wie sie in Fig. 1 wiedergegeben sind. Dies kann dadurch geschehen, dass eine abgedeckte und mit Salzhydrat oder einer Salzhydratmischung verfüllte Matte auf eine noch nicht abgedeckte, aber bereits verfüllte Matte aufgelegt und verschweisst wird. Die statische Tragfähigkeit der beiden Matten lässt sich noch durch Verstärken der Abdeckung der ersten Matte erhöhen.

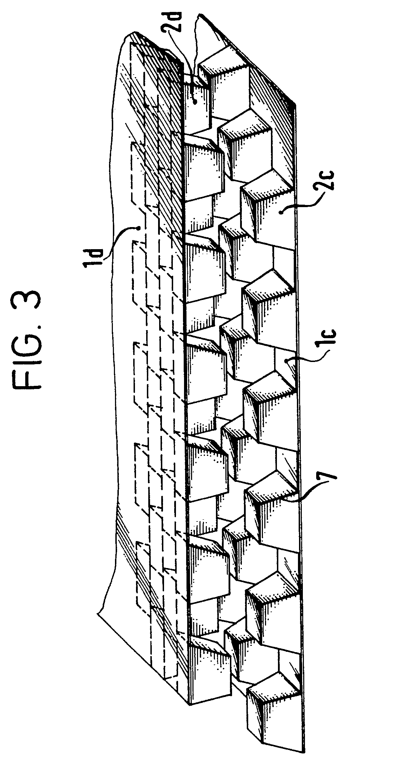

Ein Ausführungsbeispiel eines Latentwärmespeichers mit kompakter Salzhydratschichtung zeigt Fig. 3. Zwei übereinandergeschichtete Matten 1c, 1d sind mit Zellen 2c, 2d versehen, die konisch verlaufende Zellenwände 7 aufweisen. Die Zellen 2c und 2d sind pyramidenstumpfartig geformt. Zur Ausbildung der Zellen wird eine Polyethylenfolie von 0,025 mm Stärke verwendet. Die Abdeckung der Zellen besteht aus einer beidseitig mit Polyethylenfolie laminierten Aluminiumfolie. Nach Abfüllen der Matten und Aufeinanderlegen werden die Matten an ihrem gemeinsamen Aussenrand wasserdampfdicht verschweisst. Die Matten sind sowohl horizontal wie vertikal einsetzbar, ihre Funktion ist lageunabhängig.

Zwischen den Zellen 2c und 2d einer jeden Matte verbleibt ein Zwischenraum, der spiegelbildlich die gleiche Form wie die einzelnen Zellen zeigt, er weist ebenfalls die Form von Pyramidenstümpfen auf. Sind die Zellen 2c zu den Zellen 2b auf den Matten versetzt angeordnet, so füllen beim Aufeinanderschichten der Matten die Zellen 2c der Matte 1c die Zwischenräume zwischen den Zellen 2b der Matte 1b voll aus. Es entsteht so eine kompakte, aus einzelnen mit Salzhydrat gefüllten Zellen bestehende Latentwärmespeicherschicht.

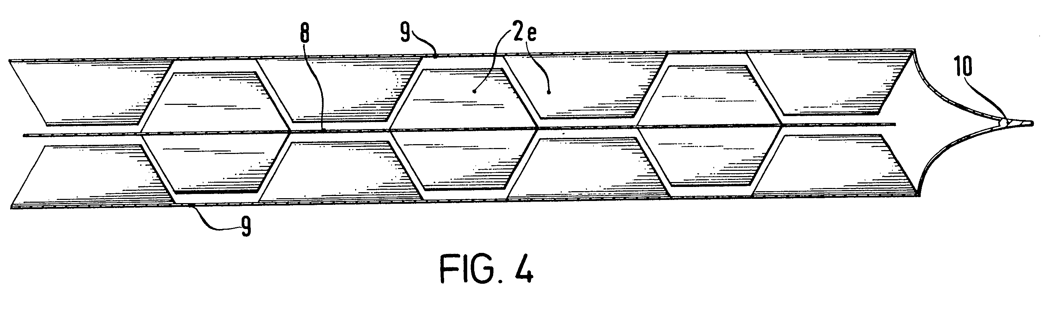

Ein weiteres Ausführungsbeispiel ist in Fig. 4 dargestellt. Die Matte besteht aus vier Lagen pyramidenstumpfartig geformter Zellen 2e. Während die beiden mittleren Lagen der Zellen von einer Zwischenmatte 8 aus Polyethylenfolie von 0,025 mm Stärke getragen werden, finden für die äusseren Lagen als Aussenmatten 9 Matten Verwendung, wie sie in Fig. 3 gezeigt sind. Die Aussenmatten 9 bestehen aus einer die Zellen aufweisenden, profilierten Polyethylenfolie von 0,025 mm, die nach Abfüllen der Zellen mit einer beidseitig mit Polyethylenfolie beschichteten Aluminiumfolie abgedeckt wird. Die Aussenmatten 9 werden auf die Zwischenmatten 8 derart aufgelegt, dass jede Zelle 2e jeder Matte einen Zwischenraum zwischen den Zellen der jeweils benachbarten Matte ausfüllt und so eine kompakte aus einer Vielzahl von Zellen 2e bestehende Doppelschicht-Speichermatte gebildet wird. An ihren Aussenseiten weist die Doppelschicht-Speichermatte jeweils die mit Polyethylen beschichtete Aluminiumfolie auf. Durch Verschweissen dieser äusseren Aluminiumfolien wird die Doppelschicht-Speichermatte an ihrem Aussenrand 10 wasserdampfdicht verschlossen.

Die Form der Zellen ist auf die in den Fig. 1 bis 4 gezeigten Ausführungsbeispiele nicht beschränkt. Die Zellen können beispielsweise auch kegelförmig ausgeführt sein oder eine Paraboloidform aufweisen.

Im Ausführungsbeispiel wurden die Zellen der Matten mit Glaubersalz gefüllt, dem zur Senkung des Schmelzpunktes NaCl zugegeben wurde. Zur Stabilisierung enthielt die Salzhydratmischung zusätzlich noch pyrolytisches Siliciumoxid und zur Verringerung der Unterkühlungsneigung Borax. Eine Salzhydratmischung, die für einen Schmelzpunkt von etwa 20 °C eingestellt ist, weist 176 g Glaubersalz, 45 g NaCl, 16 g pyrolytisches Silicium, 12 g Borax und 224 g Wasser auf. Für diese Salzhydratmischung mit Salzen ist eine maximale Entfernung zwischen den Zellwänden des Zellraums von 1 cm nicht zu überschreiten, soll ein Stratifizieren vermieden werden. Die Zellen 2, 2a und 2b weisen somit einen maximalen Durchmesser 3 und eine maximale Höhe 4 von jeweils 1 cm auf. Bei den pyramidenstumpfartigen Zellen 2c, 2d, 2e sind die Zellwände ebenfalls maximal 1 cm voneinander entfernt.

Für eine Salzhydratmischung von 156 g Glaubersalz mit 45 g NaCl, 12 g Borax, 8,5 g Borsäure und 200 g Wasser sowie 37,5 g Attapulgit als Stabilisator ist eine maximale Zellraumabmessung von 2,5 cm nicht zu überschreiten.

Je nach Zusammensetzung der Glaubersalzmischung lassen sich auch Abmessungen von 5–7 cm als maximale Entfernung zwischen den Zellwänden erreichen, falls die Menge der Stabilisatoren in der Salzhydratmischung erhöht wird. Dies vermindert jedoch die Wärmekapazität des Latentwärmespeichers. Darüber hinaus ist für die Auslegung der maximalen Grösse des Zellraumes die Wärmeleitung der im Zellraum gebildeten Feststoffe von ausschlaggebender Bedeutung.

**Patentansprüche**

1. Latentwärmespeicher mit Salzhydrat oder mit einer Mischung von Salzhydraten und Salzen, die bei Temperaturen um ihren Schmelzpunkt als Wärmespeichermedium dienen und innerhalb einzelner Zellen von ein- oder mehrlagig angeordneter Matten verfüllt sind, die nach aussen wasserdampfundurchlässig sind, dadurch gekennzeichnet, dass die Zellen (2, 2a, 2b, 2c, 2d, 2e) wasserdicht abgeschlossen sind und einen Zellenraum (5) aufweisen, der von maximal nur so weit voneinander entfernt angeordneten Wänden begrenzt wird, dass bei frei wählbarer Lagerung der Matten (1 bis 1d, 8, 9) innerhalb des Zellenraumes keine Entmischung zwischen gebildeten Salzkristallen und verbleibender Schmelze erfolgt.

2. Latentwärmespeicher nach Anspruch 1, dadurch gekennzeichnet, dass die Zellen (2 bis 2d) mit räumlichem Abstand (6) zueinander angeordnet sind.

3. Latentwärmespeicher nach Anspruch 2, dadurch gekennzeichnet, dass der Abstand (6) zwischen den Zellen (2, 2a, 2c, 2d, 2e) derart bemessen ist, dass beim Aufeinanderlegen zweier Matten (1, 1a, 1c, 1d, 8, 9) die Zellen (2, 2c, 2e) der einen Matte (1, 1c, 9) im Zwischenraum zwischen den Zellen (2a, 2d, 2e) der anderen Matte (1a, 1d, 8) angeordnet sind.

4. Latentwärmespeicher nach einem der Ansprüche 1 bis 3, dadurch gekennzeichnet, dass zwischen Zellen (1, 1a) für ein Wärme transportierendes Medium ein Strömungsraum mit hohem Wärmeübergang verbleibt.

5. Latentwärmespeicher nach einem der Ansprüche 1 bis 4, dadurch gekennzeichnet, dass die Zellen (2c, 2d, 2e) konisch verlaufende Wände (7) aufweisen.

6. Latentwärmespeicher nach einem der Ansprüche 1 bis 5, dadurch gekennzeichnet, dass zwischen den Zellen (2c, 2d, 2e) verbleibende Zwischenräume spiegelbildlich zu jeder Zelle (2c, 2d, 2e) geformt sind.

7. Latentwärmespeicher nach Anspruch 5 oder 6, dadurch gekennzeichnet, dass die Zellen (2c, 2d, 2e) die Form von Pyramidenstümpfen aufweisen.

8. Latentwärmespeicher nach einem der vorhergehenden Ansprüche, dadurch gekennzeichnet, dass als Speichermedium Glaubersalz oder eine mit Glaubersalz gebildete eutektische Salzhydratmischung verwendet wird.

**Claims**

1. Latent heat storage device with a salt hydrate or a mixture of salt hydrates and salts which serve as heat storage medium at temperatures around their melting point and constitute a filling within individual compartments of mats which are arranged in a single layer or in multiple layers and are impervious to water vapour to the exterior, characterised in that the compartments (2, 2a, 2b, 2c, 2d, 2e) are closed in watertight manner and have an interior space (5) which is bounded by walls arranged at a distance from one another at the most only such that, with free choice as to the positioning of the mats (1 to 1d, 8, 9), no dissociation of formed salt crystals from remaining melt occurs within the interior spaces of the compartments.

2. Latent heat storage device according to claim 1, characterised in that the compartments (2 to 2d) are situated with spacing (6) from one another.

3. Latent heat storage device according to claim 2, characterised in that the spacing (6) of the compartments (2, 2a, 2c, 2d, 2e) is made such that when two mats (1, 1a, 1c, 1d, 8, 9) are laid on one another the compartments (2, 2c, 2e) of one mat (1, 1c, 9) are situated in the intervening spaces between the compartments (2a, 2d, 2e) of the other mat (1a, 1d, 8).

4. Latent heat storage device according to one of claims 1 to 3, characterised in that a throughflow space with high heat transfer value remains between compartments (1, 1a) for a heat-transporting medium.

5. Latent heat storage device according to one of claims 1 to 4, characterised in that the compartments (2c, 2d, 2e) have conically shaped walls (7).

6. Latent heat storage device according to one of claims 1 to 5, characterised in that intervening spaces remaining between the compartments (2c, 2d, 2e) are formed with the mirror-image shape of each compartment (2c, 2d, 2e).

7. Latent heat storage device according to claim 5 or 6, characterised in that the compartments (2c, 2d, 2e) are in the form of truncated pyramids.

8. Latent heat storage device according to one of the preceding claims, characterised in that Glauber's salt or a eutectic salt hydrate mixture formed with Glauber's salt is used as storage medium.

**Revendications**

1. Accumulateur de chaleur latente ayant un sel hydraté ou un mélange de sels hydratés et de sels, qui, à des temperatures voisines de leur point de fusion, servent de milieu d'accumulation de chaleur et dont sont remplies des pochettes individuelles de nappes disposées en une couche ou en plusieurs couches et imperméables à la vapeur d'eau vers l'extérieur, caractérisé en ce que les cellules (2, 2a, 2b, 2c, 2d, 2e) sont fermées de manière étanche à l'eau et présentent une chambre intérieure de cellule délimitée par des parois éloignées au maximum les unes des autres seulement pour qu'indépendamment la disposition choisie librement des nappes (1 à 1d, 8, 9), il ne se produit pas à l'intérieur de la pochette de ségrégation entre les cristaux de sel formés et la masse fondue restante.

2. Accumulateur de chaleur latente suivant la revendication 1, caractérisé en ce que les pochettes (2 à 2d) sont disposées à distance (6) les unes des autres.

3. Accumulateur de chaleur latente suivant la revendication 2, caractérisé en ce que la distance (6) entre les pochettes (2, 2a, 2c, 2d, 2e) est telle que, lors de la superposition de deux nappes (1, 1a, 1c, 1d, 8, 9), les pochettes (2, 2c, 2e) de l'une des nappes (1, 1c, 9) viennent dans l'intervalle entre les pochettes (2a, 2d, 2e) de l'autre nappe (1a, 1d, 8).

4. Accumulateur de chaleur latente suivant l'une des revendications 1 à 3, caractérisé en ce qu'il subsiste entre des pochettes (1, 1a) une chambre, à grande transmission de chaleur, d'écoulement d'un milieu transportant de la chaleur.

5. Accumulateur de chaleur latente suivant l'une des revendications 1 à 4, caractérisé en ce que les pochettes (2c, 2d, 2e) présentent des parois (7) coniques.

6. Accumulateur de chaleur latente suivant l'une des revendications 1 à 5, caractérisé en ce que des intervalles subsistant entre les pochettes (2c, 2d, 2e) sont conformés de manière symétrique, par rapport à chaque pochette (2c, 2d, 2e).

7. Accumulateur de chaleur latente suivant la revendication 5 ou 6, caractérisé en ce que les pochettes (2c, 2d, 2e) présentent la forme de tronc de pyramide.

8. Accumulateur de chaleur latente suivant l'une des revendications précédentes, caractérisé en ce que du sel de Glauber ou un mélange eutectique de sels hydratés formés de sel de Glauber est utilisé comme milieu d'accumulation.

FIG. 1

FIG. 2

0109043

FIG. 3

FIG. 4